# EUROPEAN PATENT SPECIFICATION

(11) **EP 2 238 582 B1**
(45) Date of publication and mention of the grant of the patent: **01.10.2014**
(21) Application number: 08870337.6
(22) Date of filing: 30.12.2008
(51) Int. Cl.: G01C 21/36

(54) **METHOD OF OPERATION OF A DYNAMIC MOBILE TRAFFIC ROUTING SYSTEM**
VERFAHREN ZUR STEUERUNG EINES MOBILES VERKEHRSFÜHRUNGSSYTEMS
PROCÉDÉ DE FONCTIONNEMENT D'UN SYSTÈME DE ROUTAGE DE TRAFIC MOBILE DYNAMIQUE

(30) Priority: 31.12.2007 US 967265
(43) Date of publication of application: 13.10.2010
(73) Proprietor: TeleNav, Inc., Sunnyvale, CA 94086 (US)
(72) Inventor: SHRIVATHSAN, Musiri, Sunnyvale California 94087 (US); CRANE, Nicola A., San Francisco California 94117 (US); CHIU, David, Menlo Park California 94025 (US)
(74) Representative: Liesegang, Eva
(86) International application number: PCT/US2008/088577
(87) International publication number: WO 2009/088885

(56) References cited:
- US-A1- 2001 029 425
- US-A1- 2002 173 905
- US-A1- 2003 191 580
- US-A1- 2004 204 845
- US-A1- 2007 208 498
- US-B1- 6 845 322

## Description

### TECHNICAL FIELD

The present invention relates generally to a location based service system, and more particularly, to a mobile client navigation system having a traffic routing system, wherein a mobile client and a server communicate to carry out navigation tasks.

### BACKGROUND ART

Modem portable consumer electronics, especially client devices such as navigation systems, cellular phones, portable digital assistants, and combination devices, are providing increasing levels of functionality to support modem life including location-based information services. Numerous technologies have been developed to utilize this new functionality. Some of the research and development strategies focus on new technologies while others focus on improving the existing and mature technologies. Research and development in the existing technologies may take a myriad of different directions.

As consumers become more empowered with the growth of mobile location based service devices, new and old paradigms begin to take advantage of the features of this new device space. There are many technological solutions to take advantage of this new device location opportunity. Existing solutions provide navigation information, location information, or a combination thereof to the mobile device having navigation and location based services functionality. Although technology improves the information provided to the mobile device, the information provided nevertheless suffers from some drawbacks. Information provided often is not mutable without actual deviation to the predetermined travel router during actual transit.

Thus, a need remains for a mutable mobile traffic routing system to efficiently interact and access real-time traffic data, routing, and management information to improve the effectiveness while traveling. In view of the ever-increasing need for additional features desired by consumers in their mobile client devices, it is more and more critical that answers be found to these problems.

Patent document US2004/0204845 A1 describes a display method and apparatus for a navigation system, wherein the user is presented with a list of traffic incidents and the route is recalculated for avoiding a particular traffic incident selected by the user.

Solutions to these problems have been long sought but prior developments have not taught or suggested any definitive solutions and, thus, solutions to these problems have long eluded those skilled in the art.

### DISCLOSURE OF THE INVENTION

The present invention provides a method of operation of a mutable mobile traffic routing system including: receiving traffic routing parameters by a client from a server to be shown on a display of the client; selecting a traffic re-routing request parameter, based on a traffic routing control parameter, from a portion of the traffic routing parameters at the client; sending the traffic re-routing request parameter from the client to the server; updating the traffic routing parameters at the server based on the traffic re-routing request parameter; and sending the traffic routing parameters updated with the traffic re-routing request parameter from the server to the client.

Certain embodiments of the invention have other aspects in addition to or in place of those mentioned above. The aspects will become apparent to those skilled in the art from a reading of the following detailed description when taken with reference to the accompanying drawings.

### BRIEF DESCRIPTION OF THE DRAWINGS

FIG. 1 illustrates a method of operation of a mutable mobile traffic routing system in an embodiment of the present invention;
FIG. 2 is a block diagram of the method of operation of the mutable mobile traffic routing system of FIG. 1;
FIG. 3 is a flow chart of the method of operation of the mutable mobile traffic routing system of FIG. 1;
FIG. 4 is a flow chart of the manual and automatic traffic re-routing update modes of the mutable mobile traffic routing system of FIG. 1;
FIG. 5 is a flow chart of the server of the mutable mobile traffic routing server system of FIG. 1;
FIGs. 6A, 6B, 6C and 6D are illustrations of a traffic routing operation displayed by the client with the mutable mobile traffic routing system; and
FIG. 7 is a flow chart of a method of operation of a mutable mobile traffic routing system in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail. Likewise, the drawings showing embodiments of the system are semi-diagrammatic and not to scale and, particularly, some of the dimensions are for the clarity of presentation and are shown greatly exaggerated in the drawing FIGs. The term "system" as used herein means and refers to the method and to the apparatus of the present invention in accordance with the context in which the term is used.

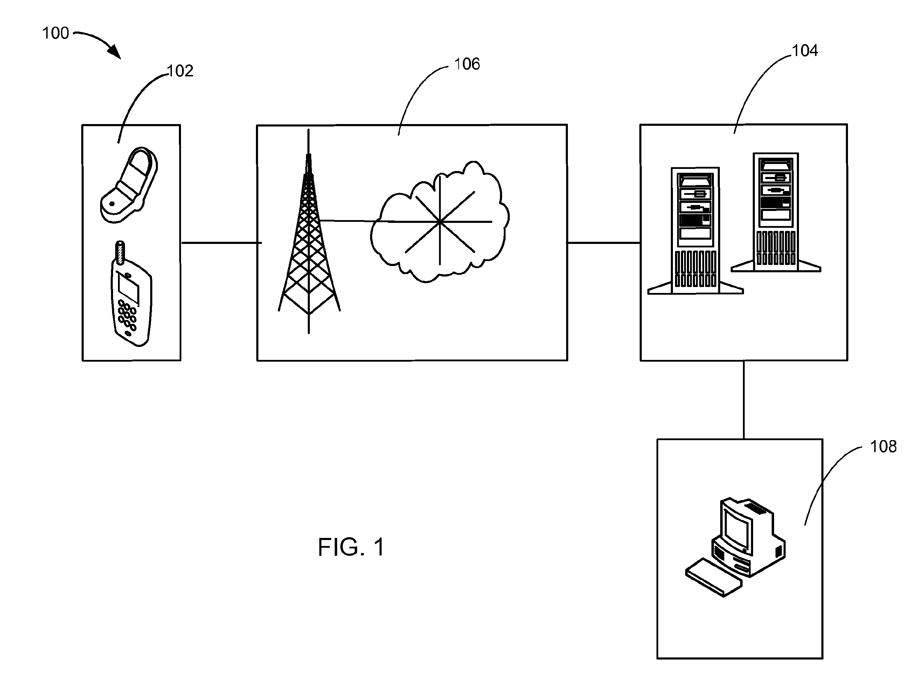

Referring now to FIG. 1, therein is illustrated a method of operation of a mutable mobile traffic routing system 100 in an embodiment of the present invention. A client 102 is connected to a communication path 106, such as a wireless telecommunication network, to a server 104. As used herein, the client 102 can be of any of a variety of mobile devices, such as a cellular phone, personal digital assistant, a notebook computer, or other multi-functional mobile communication or entertainment devices having means for coupling to the communication path 106 to communicate with the server 104 and means for monitoring location of the client 102, preferably, with a global positioning system (GPS) function or navigation system.

The client 102 includes, for example, a control device (not shown), such as a microprocessor, software (not shown), a memory (not shown), communication components (not shown), location monitoring components (not shown), and a user interface. The user interface, such as a display, a key pad, touchpad, a microphone, and a speaker, allows the user to interact with the client 102 and to provide traffic routing control inputs. The microprocessor executes the software and provides the intelligence of the client 102 for interaction with the server 104 for relevant information, for the user interface, for interaction with the communication path 106, and interaction to the location monitoring system of the client 102, as well as other functions pertinent to a location based service communication device.

The memory, such as volatile, nonvolatile memory, internal only, externally upgradeable, or a combination thereof, may store the software, setup data, and other data for the operation of the client 102 as a mobile location based service communication device. The memory may also store the relevant information, such as maps, route information, traffic information, traffic routing and point of interest (POI), etc., from the server 104 or may be preloaded. The memory may also store the sampled or created relevant information to be transmitted to the server 104.

For example, the functions of the client 102 may be performed by software, firmware, hardware, or a combination thereof. The communication components can include active and passive components, such as microelectronics or an antenna, for interaction to the cellular system of the communication path 106. The navigation components can include the active and passive components, such as microelectronics or an antenna, for interaction with the communication path 106.

The communication path 106 can be of any of a variety of telecommunication networks. For example, the communication path 106 may include wireless communication, wired communication, or the combination thereof. Satellite communication, cellular communication, wireless fidelity (WiFi), and worldwide interoperability for microwave access (WiMAX) are examples of wireless communication that may be included in the communication path 106. Ethernet, digital subscriber line (DSL), fiber to the home (FTTH), and plain old telephone service (POTS) are examples of wired communication that may be included in the communication path 106. Further, the communication path 106 may traverse a number of network topologies and distances. For example, the communication path 106 may include personal area network (PAN), local area network (LAN), metropolitan area network (MAN), and wide area network (WAN).

The server 104 can include a number of devices, for example, a control device (not shown), such as a microprocessor, software (not shown), a memory, communication components (not shown), location monitoring components (not shown), and a user interface. The microprocessor executes the software and provides the intelligence of the server 104 for interaction with the client 102, interaction to the communication system of the communication path 106 and interaction with a server user interface 108.

For illustrative purposes, the server 104 is shown in a single location, although it is understood that the server 104 may be located at different locations. For example, the server 104 may represent servers in a computer room, or distributed across different rooms or geographical locations. Also for illustrative purposes, the server 104 and the server user interface 108 are shown as separate and discrete components, although it is understood that the server user interface 108 may by included in the server 104. Further for illustrative purposes, the server user interface 108 is shown coupled to the server 104, although it is understood that the server user interface 108 may couple to the server 104 differently. For example, the server user interface 108 may interact with the communication path 106 to communicate with the server 104.

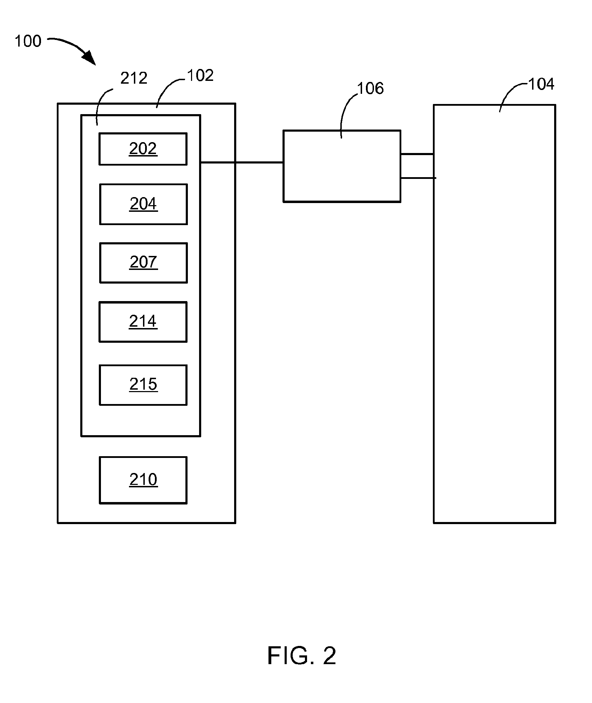

Referring now to FIG. 2, therein is shown a block diagram of the method of operation of the mutable mobile traffic routing system 100 of FIG. 1. The client 102 couples with the communication path 106 to send a server request 202 to the server 104. In response to the server request 202, the client 102 receives traffic routing parameters 204 from the server 104 over the communication path 106. The client 102 couples with the communication path 106 to send a traffic re-routing request parameter 207 to the server 104.

The traffic routing parameters 204 include control and data parameters for controlling the operation of a display 210 of the client 102, preferably in association with displaying navigation route data received by the client 102. As further described later, the traffic routing parameters 204 may include control and data parameters for controlling the operation of the display 210 in association with a variety of navigation events, such as in association with notifying a user of navigational directions, traffic congestion, of location-based information or messaging, such as relating to traffic events, point of interests, traffic routings, special conditions or marketing message as an example.

The client 102 may store the traffic routing parameters 204 in a local storage 212. The local storage 212 may be implemented in a number of ways. For example, the local storage 212 may be a nonvolatile storage such as non-volatile random access memory (NVRAM) or a volatile storage such as static random access memory (SRAM). The traffic routing parameters 204 preferably include locally stored control and data parameters for controlling the operation of the display 210 of the client 102, preferably in association with displaying navigation related to the traffic routing parameters 204 received by the client 102 from the server 104 via the communication path 106.

As further described later, the traffic routing parameters 204 include a traffic routing control parameter 214 for controlling the display 210 of navigation and traffic routing information including location specific traffic routings, display conditions, navigational directions, location-based information, or marketing messages. A navigation unit 215 in the client 102 can work in cooperation with the traffic routing parameters 204 for controlling the display 210. For example, the navigation unit 215 can include the communication components of the client 102 as described in FIG. 1.

The client 102 may accept input from the user control, such as a key entry, to select one or a portion of the traffic routing parameters 204 to generate a traffic routing request to send to the server 104 to update the traffic re-routing request parameter 207 for the traffic routing parameters 204. The updated information from the traffic re-routing request parameter 207 can be used by the server 104 to compute billing information, usage information, or a combination thereof as well as updated traffic routing information for the selected portion of the traffic routing parameters 204.

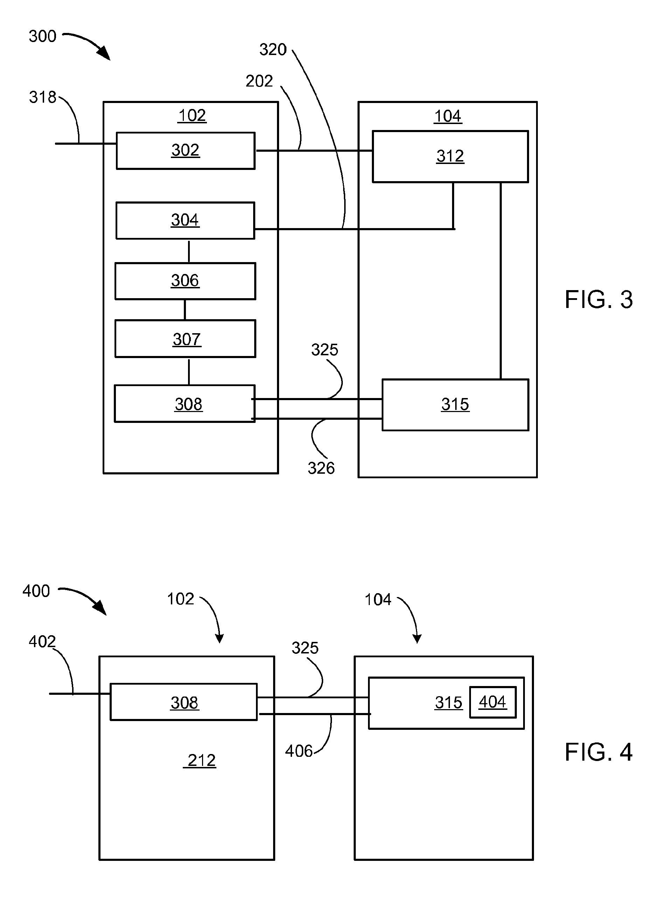

Referring now to FIG. 3, therein shown is a flow chart 300 of the method of operation of the mutable mobile traffic routing system 100 of FIG 1. In operation, for example, the client 102 preferably receives a destination request 318 from the user input means (not shown) and sends the server request 202 via the communication path 106 of FIG. 1 to the server 104 in a block 302.

The server 104 receives the server request 202 from the client 102 and generates the traffic routing parameters 204 of FIG. 2 and sends a traffic routing response 320 containing the traffic routing parameters 204 to the client 102 via the communication path 106 in a block 312.

The client 102 receives the traffic routing response 320 containing the traffic routing parameters 204 from the server 104 over the communication path 106 in a block 304. The client 102 preferably detects the traffic routing control parameter 214 for use with the traffic routing parameters 204 from the traffic routing response 320 and operates the display 210 of FIG. 2 of the client 102 in a block 306.

The client 102 preferably operates in an traffic routing display mode determined by the traffic routing control parameter 214 and displays a portion of the traffic routing parameters 204 on the display 210 in any number of display modes, such as flashing traffic segments, color coded traffic segments, highlighted traffic segments, bold traffic segment, Point of Interest traffic segments, annotated traffic segments, scrolling message box annotated traffic segments, multimedia annotated traffic segments, hyperlink annotated traffic segments, audio annotated traffic segments, mixed multimedia annotated traffic segments, or any combination thereof in a block 307.

The client 102 can operate in the traffic routing display mode determined by the traffic routing control parameter 214 and displays the traffic routing parameters 204 on the display 210 in any number of messaging modes, such as banner ad messages, popup messages, full screen traffic alerts, audio clip, video clip, mixed multimedia messaging or any combination thereof in the block 307. The client 102 can also operate in the traffic routing display mode determined by the traffic routing control parameter 214 and displays the traffic routing parameters 204 on the display 210 in any number of background display modes, such as a stationary map, moving map, split screen, full screen, segmented, route-based, free-driving based or any combination thereof in the block 307.

The client 102 can accept input from the user control, such as a softkey entry or a single button click, to select one or a portion of the traffic routing parameters 204 and generate a traffic re-routing request 325 to send to the server 104 in a block 308. The selected traffic route segment from the traffic routing parameters 204 can represent a traffic congestion point, an avoidable point of interest, streets, high traffic areas, or any combination thereof, as examples. The server 104 can update the traffic routing parameters 204 based on the input in a block 314 and sends the traffic routing response 320 containing the traffic routing parameters 204, with the updates, to the client 102 via the communication path 106 in the block 312. The updated information from the traffic routing parameters 204 is used by the client 102 to display alternate traffic routes on the display 210.

For illustrative purposes, the mutable mobile traffic routing system 100 is described for updating the traffic routing parameters 204 based on avoidable incidents or locations, although it is understood that the mutable mobile traffic routing system 100 may update the traffic routing parameters 204 differently. For example, the mutable traffic routing system 100 can modify the route in the traffic routing parameters 204 based on desirable points of interest, such as particular local business, events, or addresses.

The client 102 preferably receives an automatic location update input from the navigation unit 215 and can automatically send the traffic re-routing request 325 via the communication path 106 to the server 104 in the block 308. The server 104 receives the traffic re-routing request 325 from the client 102 and generates the traffic routing parameters 204, with the updates based on the input, in a block 315 and sends the traffic routing response 320 containing the traffic routing parameters 204 to the client 102 in the block 312 via the communication path 106.

For illustrative purposes, the server 104 is described as providing the traffic routing parameters 204 to the client 102 as a response to the server request 202 resulting from the destination request 318, although it is understood that the server 104 may provide different responses. For example, the server 104 may provide mapping updates, news information, scheduling information, weather information, local service or business information, marketing messaging and location reminder information, or a combination thereof in addition to the traffic routing parameters 204.

Referring now to FIG. 4, therein shown is a flow chart 400 of the manual and automatic traffic re-routing update modes of the mutable mobile traffic routing system 100 of FIG.1. In operation, for example, the client 102 can operate in a manual traffic re-routing mode determined by the traffic routing control parameter 214 of FIG. 2. The client 102 preferably receives a manual traffic re-routing input 402 from the user input means (not shown) to request a new traffic route. The user input means can be a single click control, a softkey on the display, keypad, voice input, touchpad, remote key, keyboard, virtual keyboard, button, or any combination thereof. The client 102 sends the manual traffic re-routing input 402 to the server 104 via the communication path 106 in the block 308. The manual traffic re-routing input 402 can include any number of parameters such as traffic segments, selection statue, manual traffic routing request value, point of interest (POI), landmark, street, address, traffic event, time, location, current location, speed, direction, destination, start location, user identification, user preferences, or any combination thereof.

The server 104 receives the traffic re-routing request 325 with the manual traffic re-routing input 402 and stores it in a server storage 404, such as disk storage or server main memory, in the block 315. The server 104 generates the traffic routing parameters 204 that avoid identified locations and sends the traffic routing parameters 204 to the client 102 in the block 312 of FIG. 3.

The client 102, in another example, can operate in an automatic traffic re-routing mode determined by the traffic routing control parameter 214 and generate an automatic traffic re-routing input 406. The traffic re-routing request 325 of FIG. 3 with the automatic traffic re-routing input 406 is sent via the communication path 106 to the server 104 in the block 308. The server 104 receives the traffic re-routing request 325 and stores it in the server storage 404 in the block 315.

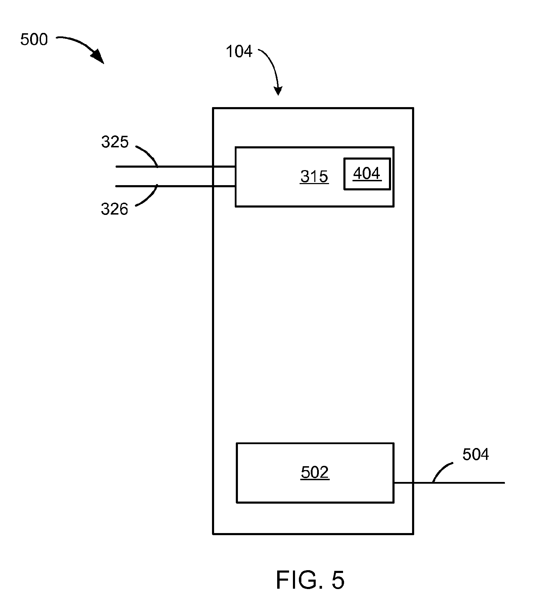

Referring now to FIG. 5, therein shown is a flow chart 500 of the server 104 of the mutable mobile traffic routing system 100 of FIG. 1. In operation, for example, the server 104 preferably receives the traffic re-routing request 325 from the client 102 of FIG. 1 in the block 315 via the communication path 106 of FIG. 1. The traffic re-routing request 325 can include the traffic re-routing request parameter 207 of FIG. 2. The server 104 can store the traffic re-routing request parameter 207 in the server storage 404 that can later be used to update the traffic routing parameters 204 based on the traffic re-routing request parameter 207.

The server 104, preferably provide an traffic routing management system 502 that can generate reports showing data such as traffic routing status, use, quality, type of status or any combination thereof. The server 104 can receive a server user input 504 and provide traffic routing management control commands to control and manage the traffic routing management system 502.

The server 104 in another example can provide a billing function based on the traffic re-routing request parameter 207 for a portion of the traffic routing parameters 204 that can provide a billing cost entry to be stored in the server storage 404 for the traffic routing parameters 204. The billing type can include any type of billable event including cost per routing, advanced traffic detail, calendar event data, scheduled maintenance data, or any combination thereof.

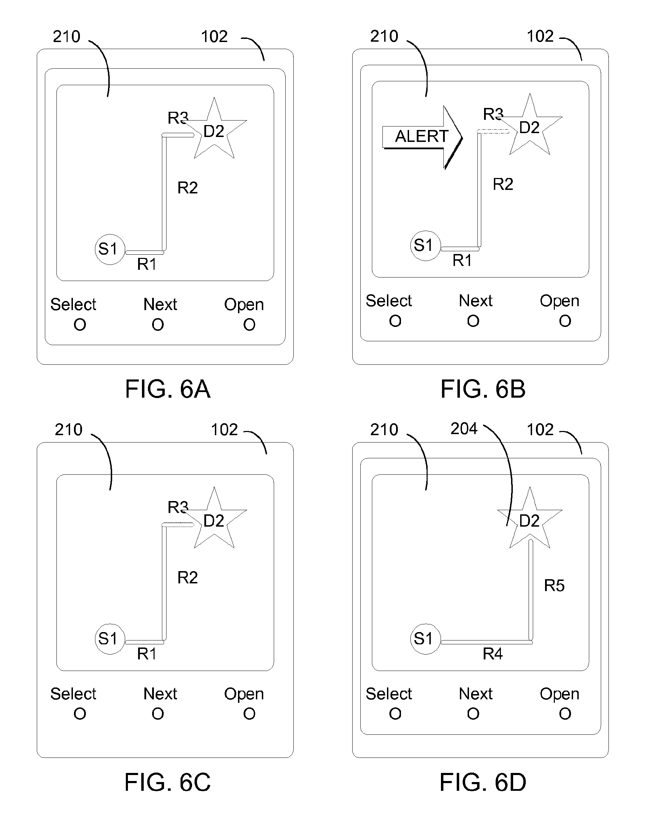

Referring now to FIGs. 6A, 6B, 6C and 6D, therein are illustrations of a traffic routing operation displayed by the client 102 with the mutable mobile traffic routing system 100. For example, a navigation path with segments R1, R2, and R3 is shown on the display 210 of the client 102 of the mutable mobile traffic routing system 100 of FIG. 1. Navigation from the starting point S1 to the destination D2, the client 102 can display a navigation map and display a traffic alert and a traffic re-routing around a congested traffic segment.

In FIG 6A, the client 102 displays a traffic routing including traffic segments R1, R2, and R3 on the display 210. In FIG. 6B, traffic segment R3 is highlighted and a three dimensional indicator shows that this segment has high levels of traffic.

In FIG 6C, traffic segment R3 is selected by an input from the user input device and the traffic re-routing request parameter 207 of FIG. 2 is sent to the server 104 of FIG. 2. This will request a new set of the traffic routing parameters 204 of FIG. 2 be sent to the client 102 from the server 104. In FIG 6D, the client 102 displays an alternate route avoiding traffic segments R3 of FIG. 6C and routing to destination D2 via the updated traffic segments R4 and R5.

For illustrative purposes, the mutable mobile traffic routing system 100 is described avoiding traffic congestions in a route, although it is understood that the mutable mobile traffic routing system 100 can avoid traffic segments or a portion of the route based on other criteria. For example, the mutable mobile traffic routing system 100 may avoid selectable incidents, such as traffic incidents, future scheduled events, or projected events. An example of a projected event can include ending time of an event, such as a sporting event, where traffic on some route segments can become congested. The mutable mobile traffic routing system 100 includes a temporal component, event component, or a combinational thereof as well as current traffic incident components, including weather feeds.

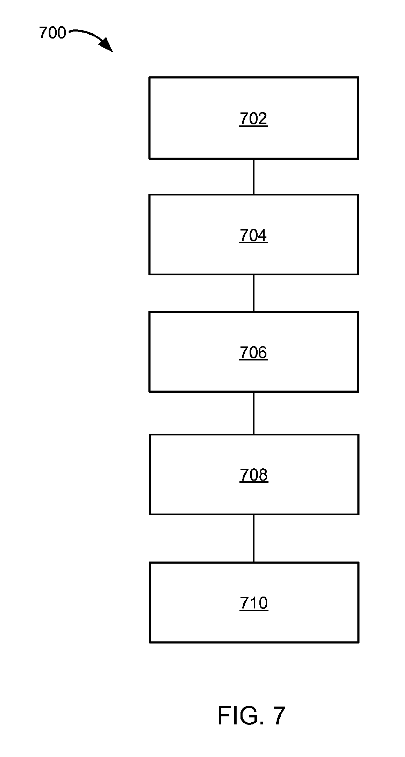

Referring now to FIG. 7, therein is shown a flow chart of a method 700 of operation of a mutable mobile traffic routing system 100 in a further embodiment of the present invention. The method 700 including receiving traffic routing parameters by a client from a server to be shown on a display of the client in a block 702; selecting a traffic re-routing request parameter, based on a traffic routing control parameter, from a portion of the traffic routing parameters at the client in a block 704; sending the traffic re-routing request parameter from the client to the server in a block 706; updating the traffic routing parameters at the server based on the traffic re-routing request parameter in a block 708; and sending the traffic routing parameters updated with the traffic re-routing request parameter from the server to the client in a block 710.

Yet another important aspect of the present invention is that it valuably supports and services the historical trend of reducing costs, simplifying systems, and increasing performance.

These and other valuable aspects of the present invention consequently further the state of the technology to at least the next level.

Thus, it has been discovered that the mutable mobile traffic routing system of the present invention furnishes important and heretofore unknown and unavailable solutions, capabilities, and functional aspects for improving yield, increasing reliability, and reducing cost of mobile client having location based services capability. The resulting processes and configurations are straightforward, cost-effective, uncomplicated, highly versatile, accurate, sensitive, and effective, and can be implemented by adapting known components for ready, efficient, and economical manufacturing, application, and utilization.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1. A method (700) of operation of a mobile traffic routing system (100) comprising:
sending traffic routing parameters (204) from a server to a client, for controlling the operation of a display on the client (102); wherein the traffic routing parameters (204) include a traffic routing control parameter (214)
selecting at the client (102) a traffic re-routing request parameter (207), based on a traffic routing control parameter, from a portion of the traffic routing parameters (204);
sending the traffic re-routing request parameter (207) from the client to the server (104);
updating the traffic routing parameters (204) based on the traffic re-routing request parameter (207); and
sending the updated traffic routing parameters (204) from the server to the client for displaying alternate traffic routes, avoiding the selected traffic route segment, on the client (102)
**characterised in that** the step of
selecting the traffic re-routing request parameter (207) includes selecting a future scheduled event which is avoidable.

2. The method (700) as claimed in claim 1 wherein selecting the traffic re-routing request parameter (207) includes manually selecting the traffic re-routing request parameter (207).

3. The method (700) as claimed in claim 1 wherein selecting the traffic re-routing request parameter (207) includes automatically selecting the traffic re-routing request parameter (207) based on an automatic location update.

4. The method (700) as claimed in claim 1 further comprising operating a navigation unit (215) in the client (102) with the traffic routing parameters (204).

5. The method (700) as claimed in claim 1 further comprising creating a billable event with the traffic re-routing request parameter (207).

## Patentansprüche

1. Verfahren (700) zum Betreiben eines mobilen Verkehrsleitsystems (100), mit den Verfahrensschritten:
Senden von Verkehrsleitparametem (204) von einem Server an einen Client zum Steuern des Betriebs einer Anzeige des Clients (102), wobei die Verkehrsleitparameter (204) einen Verkehrsleitsteuerparameter (214) umfassen;
an dem Client (102), Wählen eines Verkehrsumleit-Anfrageparameters (207) aus einem Teil der Verkehrsleitparameter (204) gestützt auf einen Verkehrsleitsteuerparameter;
Senden des Verkehrsumleit-Anfrageparameters (207) von dem Client zu dem Server (104),
Aktualisieren der Verkehrsleitparameter (204) gestützt auf den Verkehrsumleit-Anfrageparameter (207); und
Senden der aktualisierten Verkehrsleitparameter (204) von dem Server an den Client zur Anzeige alternativer Verkehrsrouten unter Umgehung eines ausgewählten Verkehrsroutenabschnitts auf dem Client (102),
**dadurch gekennzeichnet, dass** der Schritt des Auswählens des Verkehrsumleit-Anfrageparameters (207) das Auswählen eines zukünftigen geplanten Ereignisses, welches vermeidbar ist, umfasst.

2. Verfahren (700) nach Anspruch 1, wobei das Auswählen des Verkehrsumleit-Anfrageparameters (207) das manuelle Auswählen des Verkehrsumleit-Anfrageparameters (207) umfasst.

3. Verfahren (700) nach Anspruch 1, wobei das Auswählen des Verkehrsumleit-Anfrageparameters (207) das automatische Auswählen des Verkehrsumleit-Anfrageparameters (207) gestützt auf eine automatische Aktualisierung der Position umfasst.

4. Verfahren (700) nach Anspruch 1, mit dem weiteren Schritt des Betreibens einer Navigationseinheit (215) in dem Client (102) mit den Verkehrsleitparametern (204).

5. Verfahren (700) nach Anspruch 1, mit dem weiteren Schritt des Erzeugens eines abrechenbaren Ereignisses mit dem Verkehrsumleit-Anfrageparameter (207).

## Revendications

1. Procédé (700) d'exploitation d'un système d'acheminement de trafic mobile (100), consistant à :
envoyer des paramètres d'acheminement de trafic (204), d'un serveur à un système client, en vue de commander l'exploitation d'un affichage sur le système client (102) ; dans lequel les paramètres d'acheminement de trafic (204) incluent un paramètre de commande d'acheminement de trafic (214) ;
sélectionner, au niveau du système client (102), un paramètre de demande de réacheminement de trafic (207), sur la base d'un paramètre de commande d'acheminement de trafic, à partir d'une partie des paramètres d'acheminement de trafic (204) ;
envoyer le paramètre de demande de réacheminement de trafic (207) du système client au serveur (104) ;
mettre à jour les paramètres d'acheminement de trafic (204) sur la base du paramètre de demande de réacheminement de trafic (207) ; et
envoyer les paramètres d'acheminement de trafic mis à jour (204), du serveur au système client, en vue d'afficher des chemins de trafic alternatifs, évitant le segment de chemin de trafic sélectionné, sur le système client (102) ;
**caractérisé en ce que** l'étape de sélection du paramètre de demande de réacheminement de trafic (207) consiste à sélectionner un événement planifié futur pouvant être évité.

2. Procédé (700) selon la revendication 1, dans lequel la sélection du paramètre de demande de réacheminement de trafic (207) consiste à sélectionner manuellement le paramètre de demande de réacheminement de trafic (207).

3. Procédé (700) selon la revendication 1, dans lequel la sélection du paramètre de demande de réacheminement de trafic (207) consiste à sélectionner automatiquement le paramètre de demande de réacheminement de trafic (207), sur la base d'une mise à jour de localisation automatique.

4. Procédé (700) selon la revendication 1, consistant en outre à exploiter une unité de navigation (215), dans le système client (102), avec les paramètres d'acheminement de trafic (204).

5. Procédé (700) selon la revendication 1, consistant en outre à créer un événement facturable avec le paramètre de demande de réacheminement de trafic (207).
